# EUROPEAN PATENT APPLICATION

(11) **EP 1 065 185 A1**
(43) Date of publication of application: **03.01.2001**
(21) Application number: 99305252.1
(22) Date of filing: 02.07.1999
(51) Int. Cl.: C04B 18/02, C04B 28/36

(54) **A synthetic aggregate and a process for the production thereof**

(71) Applicant: Pildysh, Mikhail, Calgary, Alberta T2Z 2B7 (CA)
(72) Inventor: Pildysh, Mikhail, Calgary, Alberta T2Z 2B7 (CA)
(74) Representative: Murnane, Graham John

(57) **Abstract**

A synthetic aggregate and a process for converting a waste material into the synthetic aggregate. The synthetic aggregate includes a waste material and an amount of a sulphur binder for substantially coating the waste material such that the waste material is encapsulated thereby. The synthetic aggregate may also include a stabilizer for stabilizing the structure of the sulphur binder. The process comprises creating a molten sulphur binder. An amount of the waste material is mixed into the molten sulphur binder such that the waste material is substantially coated by the molten sulphur binder to produce an encapsulated waste material. The encapsulated waste material is separated into discrete particles having a size suitable for use as an aggregate to produce the synthetic aggregate. The molten sulphur binder is cooled to harden the encapsulated waste material.

## Description

### FIELD OF INVENTION

The present invention relates to a synthetic aggregate and a process for producing the synthetic aggregate. More particularly, the process of the invention is directed at converting a waste material into the synthetic aggregate utilizing a molten sulphur binder.

### BACKGROUND OF INVENTION

Numerous waste products or materials are generated by a variety industries. These waste products include contaminated sand and soil, metallurgical slag, ash, saw dust, wood shavings and various other mineral and organic by-products generated by industries such as the oil and gas, petrochemical, mining, pulp and paper, timber and construction industries. Costly solutions are often required to address the treatment and disposal problems presented by such waste materials in order to ensure that such treatment or disposal occurs in a safe and effective manner.

Several options currently exist for dealing with these types of waste materials. First, the waste materials may be disposed of in sanitary landfills. However, this solution tends to be costly and may be environmentally undesirable due to the potential for the leaching of the wastes into the surrounding soil and groundwater. Second, these wastes may undergo washing or some form of chemical treatment aimed at de-contamination of the waste. This solution also tends to be costly and may result in the production of some amount of contaminated by-products, such as waste water, which similarly requires treatment prior to disposal. As well, the decontaminated waste, such as decontaminated soil waste, may have no use and therefore must typically be stockpiled in some fashion, taking up land space.

Finally, the waste material may be encapsulated using a Portland cement binder in order to produce a concrete-like mass. However, the use of Portland cement as a binder tends to be costly due to the materials used and the necessary processing requirements for Portland cement. In addition, the use of Portland cement may present difficulties when actually using the encapsulated materials for construction due to the relatively short time which is typically available for the delivery of the concrete to a potential construction site prior to the commencement of the setting of the concrete. In addition, environmental concerns continue to be raised with respect to the use of contaminated waste materials in Portland cement concrete when being used for construction purposes. Thus, such concrete is usually restricted by environmental regulations to industrial construction sites.

The treatment of sulphur-rich petroleum oil and natural gas products, as well as some ores, produces a voluminous amount of sulphur as a by-product. While there are available uses for sulphur, such as the manufacture of fertilizers, there has tended to be a substantial oversupply of sulphur resulting from the ever increasing desulphurization of primary products such as petroleum oil, natural gas and ores. As a result of environmental concerns due to potential contamination by sulphur stock-piled on site, safe, effective and cost efficient solutions are similarly required for the treatment or disposal of such sulphur.

One use of this sulphur has been the development of sulphur cements and concretes. Sulphur concretes are materials in which aggregate is bound together by elemental sulphur. The concretes are typically cast in the molten state and bonding occurs upon cooling of the molten mass as the sulphur crystallizes. It has been found that on solidifying from the molten state that elemental sulphur tends to be a relatively good binder for conventional aggregates such as sand, gravel and stone. The physical properties of the elemental sulphur have an effect upon the properties of the resulting sulphur concrete. Generally speaking, these properties tend to be superior to the properties found in Portland cement concrete. For instance, sulphur concrete typically displays rapid strength development, high strength (tensile, compressive, flexural and fatigue), low permeability, low thermal conductivity, low electrical conductivity and high corrosion and wear resistance. Further, these properties may be modified and improved by the inclusion of various modifiers or plasticizers in the sulphur cement or concrete to produce what is referred to as modified sulphur cements and concretes.

For instance, United States of America Patent No. 4,134,775 issued January 16, 1979 to Schwoegler describes the production of shaped articles from a dry blend composition containing "sulphur and a particulate solid additive inorganic material." The dry blend is heated to fuse the sulphur and then formed into the desired shape by extrusion or pelletization. The purpose of the Patent is produce a dry blend that does not settle or stratify during shipping and storage, thereby obviating the need for re-mixing of the blend when required to be used by the consumer. The dry blend maintains its uniformity until use by the consumer. United States of America Patent No. 5,004,799 issued April 2, 1991 to Kohls et. al. also describes the formation of modified sulphur concrete into discrete self-sustaining pellets which can be shipped and stored for indefinite periods and re-melted to yield usable concrete.

The purpose of these Patents is to render the sulphur or modified sulphur concrete more amenable to transport and storage. The Patents do not deal with the treatment or disposal of waste materials nor do they deal with the production of a synthetic aggregate from the compositions. United States Patent No. 5,569,153 issued October 29, 1996 to Mallow et. al. does describe a method of immobilizing toxic waste material by forming concrete shapes. However, the process and the resulting concrete shape require the use of hydraulic or Portland cement.

Specifically, a synthetic aggregate is first created from a pozzolana, a calcium hydroxide containing material, hydrothermal cement reactane, hydraulic cement and the toxic waste material. The waste material must be admixed with a liquid and used as a waste slurry in the mixture or sufficient water must be added to provide a moldable consistency of the mixture. The mixture is permitted to cure and is then formed into the aggregate by any typical grinding technique. The synthetic aggregate is then mixed with a modified sulphur cement, a pozzolana and sand to form a concrete product. As a result, the synthetic aggregate and process of this Patent tend to be costly and involve other disadvantageous features as discussed above due at least in part to the use of hydraulic cement therein.

United States of America Patent No. 4,428,700 issued January 31, 1984 to Lennemann describes the use of a modified sulphur cement or concrete as a barrier or backfill material for the containment of waste materials. In particular, a container of waste material, which is placed within an excavation, is surrounded by modified sulphur cement or concrete which has been placed in the molten state into the excavation around the container and then allowed to cool or harden. The Patent does not discuss or deal with the formation of a composition comprising the sulphur cement and the waste material, nor does it deal with the formation of a synthetic aggregate therefrom.

Therefore, there remains a need in the industry for a process for treating or otherwise dealing with waste materials in a relatively cost effective and environmentally safe manner as compared to conventional processes. In addition, the process preferably permits the utilization of sulphur which is presently produced in an abundant supply by various industrial processes. More particularly, there remains a need in the industry for a process for converting a waste material into a synthetic aggregate and a need for a synthetic aggregate so produced which may be used in the construction and other industries. Further, the process for converting the waste material into the synthetic aggregate preferably utilizes sulphur as a binder. Finally, there is a need for a process which utilizes sulphur to encapsulate the waste material and thereby produce a synthetic aggregate. Preferably, the synthetic aggregate will provide a replacement for conventional aggregate in construction, the production of which conventional aggregate tends to be costly, energy consuming and often environmentally undesirable.

### SUMMARY OF INVENTION

In a first aspect of the invention, the invention relates to a process for converting a waste material into a synthetic aggregate. The process comprises the steps of:
(a) creating a molten sulphur binder;
(b) mixing an amount of the waste material into the molten sulphur binder such that the waste material is substantially coated by the molten sulphur binder to produce an encapsulated waste material;
(c) separating the encapsulated waste material into discrete particles having a size suitable for use as an aggregate to produce the synthetic aggregate; and
(d) cooling the molten sulphur binder to harden the encapsulated waste material.

In the process form of the invention, the process may further comprise the step of combining an effective amount of a stabilizer with the molten sulphur binder prior to the separating step for stabilizing the structure of the sulphur binder. The stabilizer combining step may be performed at any time prior to the separating step. Preferably, the stabilizer combining step is performed prior to, during or after the mixing step. In the preferred embodiment, the stabilizer combining step is performed prior to the mixing step.

As well, the process may further comprise the step of combining an effective amount of a filler with the molten sulphur binder prior to the separating step for reinforcing the synthetic aggregate. The filler combining step may be performed at any time prior to the separating step. Preferably, the filler combining step is performed prior to, during or after the mixing step. In the preferred embodiment, the filler combining step is performed prior to or during the mixing step.

In addition, the process may be further comprised of preheating the waste material prior to the mixing step in order to minimize any cooling of the molten sulfur binder as a result of the mixing step. Similarly, where a filler is used, the process may be further comprised of preheating the filler prior to combining the filler with the molten sulfur binder. Preferably, the waste material and the filler are preheated to a temperature of about the temperature of the molten sulfur binder. More particularly, the waste material and the filler are preferably preheated to a temperature of between about 120 and 200 degrees Celsius.

Further, the cooling step may cool the molten sulphur binder to any temperature sufficient to harden the encapsulated waste material. However, preferably the cooling step comprises cooling the molten sulphur binder to a temperature of less than about 90 degrees Celsius. The cooling step may be performed at any time throughout the process as necessary to produce the hardened encapsulated waste material.

Finally, in the process, the separating step may comprise any conventional method or process for separating the encapsulated waste material into the desired discrete particles. However, preferably, the separating step comprises pelletizing the encapsulated waste material to produce the synthetic aggregate. Any conventional pelletizing process may be used. However, the pelletizing process preferably utilizes extrusion or rolling techniques.

In a second aspect of the invention, the invention relates to a synthetic aggregate. The synthetic aggregate comprises: a waste material; and an amount of a sulphur binder for substantially coating the waste material such that the waste material is encapsulated thereby.

In the aggregate form of the invention, the synthetic aggregate may comprise an effective amount of a stabilizer for stabilizing the structure of the sulphur binder. In addition, the synthetic aggregate may comprise an effective amount of a filler for reinforcing the synthetic aggregate.

In both the process and aggregate forms of the invention, the stabilizer may be comprised of any substance or material capable of stabilizing the structure of the sulphur binder in order to facilitate the presence or achievement of the desired or required properties of the synthetic aggregate.

Preferably, the stabilizer is finely ground. In other words, the stabilizer is preferably comprised of a finely ground material. More preferably, the stabilizer is finely ground such that it has a Blain of at least about 4000. In the preferred embodiment, the stabilizer has a Blain of between about 4000 and 6000. A stabilizer having a Blain of greater than 6000 may also be used, however, there tends to be a "diminishing return" effect when taking into consideration the effort required to grind the stabilizer as compared to the benefit the higher Blain renders to the synthetic aggregate quality.

The stabilizer may be comprised of a portion of the waste material. Alternately, the stabilizer may be comprised of a mineral additive. Any mineral additive capable of having a stabilizing effect may be used. In a further alternative, the stabilizer may be comprised of slag, preferably being a finely ground metallurgical slag. In a still further alternative, the stabilizer may be comprised of fly ash. In a final alternative, the stabilizer may be comprised of a polymerized sulphur.

The waste material may be comprised of any industrial waste product or by-product. Preferably, the waste material is comprised of any contaminated, toxic or hazardous waste product or by-product. For instance, the waste material may be comprised of fly ash or the waste material may be comprised of slag, preferably being a metallurgical slag. However, in the preferred embodiment, the waste material is comprised of produced sand.

Finally, the filler may be comprised of any reinforcing or strength enhancing agent in order to facilitate the presence or achievement of the desired or required properties of the synthetic aggregate. However, preferably, the filler is comprised of wollastonite.

### DETAILED DESCRIPTION

The within invention is directed at a synthetic aggregate and a process for producing the synthetic aggregate. The process converts a waste material into the synthetic aggregate by encapsulating the waste material with a sulphur binder. Thus, the synthetic aggregate is comprised of the waste material and an amount of the sulphur binder.

The waste material may be comprised of any material or product which conventionally requires treatment prior to its disposal or storage due to largely environmental concerns. In particular, the waste material will typically present concerns with respect to environmental contamination such as by the leaching of any toxic or hazardous substances to the environment. However, any material or product produced as waste or a by-product of any industrial process may be used. The waste material may be comprised of a single type of waste material or may be comprised of two or more types of waste material mixed together and used in combination to produce the synthetic aggregate. In addition, the waste material is preferably in a solid form such that solid waste materials are utilized in the process. Finally, the waste materials are preferably in a substantially dry form, in contrast to being found or utilized as a waste slurry.

The waste material used in the within invention is preferably comprised of one or more of the following: contaminated sand, contaminated soil, non-metallurgical or metallurgical slag or coke, ash, fly ash, saw dust, wood shavings, produced sand and any mineral or organic by-products generated by industries such as the oil and gas, petrochemical, mining, pulp and paper, timber and construction industries. More preferably, the waste material is comprised of one or more of produced sand, fly ash from combustion of coal or metallurgical slag from lead smelting. In the preferred embodiment, the waste material is comprised of produced sand. Produced sand is contaminated sand resulting from heavy oil production. More particularly, produced sand results from pumping operations where heavy or viscous oil is present in geological formations containing sand. Typically, produced sand may contain heavy metals, chlorides and light aromatic hydrocarbons including benzene and other carcinogens.

The waste material is encapsulated within a sulphur binder. The sulphur binder is comprised of elemental sulphur. Typically, below about 90 degrees Celsius, crystallization of the sulphur occurs and there is a crystallographic inversion from the monoclinic to the more thermodynamically stable orthorhombic form. This conversion is typically complete in about 20 hours. The elemental sulphur may be obtained from any source. However, typically, the sulphur is a by-product of the de-sulphurization of petroleum oil, natural gas or ores.

Further, although not preferred, where required to achieve the desired properties of the resulting synthetic aggregate, the sulphur binder may be further comprised of an effective amount of a suitable organic modifier or plasticizer. Any conventional plasticizer may be used, for instance, dicyclopentadiene, dipentene, vinlytoluene, oligomers of cyclopentadiene and mixtures thereof. The effective amount required to achieve the desired properties will vary depending upon the type of plasticizer used and the desired properties of the synthetic aggregate sought to be achieved.

In addition, where necessary to achieve the desired properties of the synthetic aggregate, the synthetic aggregate may be further comprised of an effective amount of a stabilizer. A stabilizer is a material or substance that acts to stabilize the structure of the sulphur binder in order to produce or maintain the desired properties in the synthetic aggregate. Specifically, the stabilizer acts to minimize the formation of, or the reversion of the structure of the sulphur binder over time into, an unstable structure affecting the durability and other properties of the synthetic aggregate. More particularly, the stabilizer preferably inhibits the formation of, or reversion into, crystals and minimizes the size of any crystals which are formed. It is believed that crystal growth may be restricted as the particles of the stabilizer serve as nucleation sites inducing the formation of many small crystals instead of fewer larger ones.

It has been found that the presence of larger or macro crystals in the sulphur binder tends to reduce the durability of the synthetic aggregate upon exposure to freezing-thawing cycles. Sulphur has a relatively high thermal expansion coefficient and a low thermal conductivity. Thus, when a sulphur binder containing adjacent macro crystals of sulphur undergoes temperature changes, movement is believed to occur between the macro crystals which may break or severely weaken the structure of the sulphur binder.

Any material or substance capable of achieving the described stabilizing effect on the structure of the sulphur binder may be used as the stabilizer. In addition, any particular stabilizer may be used either alone or in combination with one or more further stabilizers.

For instance, the stabilizer may be comprised of a polymerized or polymeric sulphur. One form of polymeric sulphur presently available is referred to as "SRX polymer" developed by Alan H. Vroom and used in the production of sulphur polymer concrete or SULFURCRETE®. The SRX polymer and sulphur polymer concrete are the subject of United States of America Patent No. 4,058,500 issued November 15, 1977 to Vroom.

However, preferably the stabilizer is comprised of a finely ground material or substance which is capable of stabilizing the sulphur binder structure. The stabilizer is preferably finely ground in order to increase the surface area of the stabilizer and enhance its effectiveness. In particular, the stabilizer is preferably finely ground such that the stabilizer has a Blain of at least about 4000. The Blain for any given material is defined as the surface area in cm²/gr of the material. Thus, the higher the Blain, the greater the surface area of the material. In the preferred embodiment, the stabilizer has a Blain of between about 4000 and 6000. A stabilizer having a Blain of greater than 6000 may also be used. However, there tends to be a "diminishing return" effect when taking into consideration the effort required to grind the stabilizer as compared to the benefit the higher Blain renders to the resulting synthetic aggregate quality..

It has been found that the stabilizer may be comprised of a portion of the waste material being used in the synthetic aggregate. In particular, where at least a portion of the waste material is finely ground, as discussed above, the finely ground portion of the waste material may act as the stabilizer. Thus, depending upon the nature and characteristics of the waste material to be used in the synthetic aggregate, an additional stabilizer need not be added. In this case, the finely ground portion of the waste material simply acts as the stabilizer. Alternately, where the waste material does not include a finely ground portion or additional stabilizer is otherwise desired or required, the stabilizer may be provided by finely grinding a portion of the waste material to be combined with the sulphur binder.

It has further been found that the stabilizer may be comprised of a finely ground mineral additive. For instance, the mineral additive may comprise finely ground metallurgical slag. Other specific finely ground materials or substances which have also been found to be useful as stabilizers include phosphoric gypsum, non-metallurgical slag, coke, fly ash and produced sand. In the preferred embodiment of the invention, the stabilizer is comprised of metallurgical slag ground to a Blain of about 6000. Metallurgical slag tends to be a mixture of heavy metals and silica. The heavy metals may include zinc, lead, mercury and molybdenum.

In addition, where necessary to enhance the strength or other properties of the synthetic aggregate, the synthetic aggregate may be further comprised of a filler. The filler may be any conventional material used in the production of cement or concrete which acts as a strength enhancing agent or reinforcing agent. Typically, such fillers are inert materials which provide a fibrous reinforcement to the cement. The filler may also modify the viscosity of the mix and thus reduce any tendency for separation and may reduce the required amount of binder by filling the voids between the particles of the waste material. For instance, the filler may be comprised of carbon fibers, steel fibers, glass fibers, wood fibers or other organic fibers. However, in the preferred embodiment, the filler is comprised of wollastonite.

The process for converting the waste material into the synthetic aggregate may be performed on either a batch or continuous basis. The process comprises the steps of creating a molten sulphur binder, mixing the waste material into the molten sulphur binder to produce an encapsulated waste material, separating the encapsulated waste material into discrete particles to produce the synthetic aggregate and cooling the molten sulphur binder to harden the encapsulated waste material and thereby produce a hardened synthetic aggregate.

The creating step includes heating the sulphur binder to a temperature greater than the melting point of sulphur to produce the molten sulphur binder. In particular, the sulphur binder is preferably heated to a temperature of equal to or greater than about 120 degrees Celsius such that the sulphur binder melts. In the preferred embodiment, the sulfur binder is heated to a temperature of between about 120 and 200 degrees Celsius. As described above, the sulphur binder is comprised of elemental sulphur. In addition, the sulphur binder may include a plasticizer. Therefore, the creating step may further include mixing an effective amount of the plasticizer into the sulphur either prior to heating the sulphur binder or during the heating of the sulphur binder. Preferably, the plasticizer is substantially uniformly mixed throughout the sulphur. Further, the plasticizer may be mixed with the sulphur using any conventional mixing device, vessel or apparatus or any conventional mixing process or method.

The sulphur binder may be heated in or by any conventional heating device, vessel or apparatus or by any conventional heating method or process suitable for heating sulphur. In the preferred embodiment, the heating step is performed in a heating vessel wrapped with insulation to inhibit any heat loss therefrom. The temperature of the sulphur binder in the vessel may be monitored and controlled by any conventional temperature control or monitor. In the preferred embodiment, the heating element of the vessel is connected to a thermostat. In addition, one or more temperature sensors are installed and preferably connected to a digital temperature read-out device.

An amount of the waste material is then mixed into the molten sulphur binder. The mixing step is performed until the waste material is substantially coated by the molten sulphur binder such that the waste material is encapsulated by the molten sulphur binder. Thus, the mixing step produces an encapsulated waste material. In addition, the waste material is preferably substantially uniformly mixed into or throughout the molten sulphur binder such that a substantially uniform encapsulated waste material is produced. The coating or encapsulation of the waste material substantially binds and immobilizes the contaminants within the waste material. Thus, the encapsulation reduces or minimizes any potential for the leaching or escape of the waste material or the contaminants from the synthetic aggregate to the environment.

The mixing step may be performed by any conventional mixing device, vessel or apparatus or by any conventional mixing method or process capable of mixing the waste material into the molten sulphur binder in order to produce the encapsulated waste material.

In addition, the waste material may be pre-heated prior to the mixing of the waste material into the molten sulfur binder in order to minimize any cooling of the sulfur binder as a result of the mixing step. Thus the preheating of the waste material is beneficial from a practical standpoint in order to avoid any necessary reheating of the molten sulfur binder, as well as to assist in the reduction or elimination of any moisture in the mixture of the waste material and the molten sulfur binder, which moisture may lead to undesirable foaming of the mixture. However, this preheating step is considered to be preferred only.

Where the preheating step is performed, the waste material is preferably pre-heated to a temperature of about the temperature of the molten sulfur binder, which is preferably between about 120 and 200 degrees Celsius. In the event the addition of the waste material reduces the temperature of the molten sulfur binder, the resulting mixture of the waste material and the sulfur binder may need to be re-heated prior to the step of separating the encapsulated material into discrete particles depending upon the particular process or equipment utilized to perform the separating step.

In the preferred embodiment, the process is further comprised of the step of combining an effective amount of the stabilizer with the molten sulphur binder for stabilizing, or enhancing the stabilization of, the structure of the sulphur binder, particularly upon the later cooling of the molten sulphur binder. The stabilizer may be combined with the sulphur binder at any step or time within the process prior to the step of separating the encapsulated waste material into discrete particles in order to ensure that the stabilizer is substantially uniformly mixed throughout the molten sulphur binder prior to producing the synthetic aggregate. For instance, the stabilizer may be combined with the sulphur binder prior to heating the sulphur binder. Thus, the stabilizer may simply be combined with the sulphur, and the plasticizer where used, prior to the step of creating the molten sulphur binder.

Preferably, the stabilizer is combined with the molten sulphur binder either prior to, during or after the mixing of the waste material into the molten sulphur binder. In the preferred embodiment, the stabilizer is combined with the molten sulphur binder prior to mixing the waste material into the molten sulphur binder, i.e., prior to the mixing step. Preferably, the combining step substantially uniformly mixes the stabilizer throughout the molten sulphur binder.

The combining step may be performed by any conventional mixing device, vessel or apparatus or by any conventional mixing method or process capable of mixing the stabilizer into the unmolten sulfur or the molten sulphur binder, as required.

As well, as indicated above, an effective amount of a filler may also be added to or mixed with the molten sulphur binder. The filler may be combined with the sulphur binder at any step or time within the process prior to the step of separating the encapsulated waste material into discrete particles in order to ensure that the filler is substantially uniformly mixed throughout the molten sulphur binder prior to producing the synthetic aggregate. For instance, the filler may be combined with the sulphur binder prior to heating the sulphur binder. Thus, the filler may simply be combined with the sulphur, and the plasticizer where used, prior to the step of creating the molten sulphur binder. Alternately, the stabilizer may be combined with the molten sulphur binder at any time following the creating step, that is, prior to, during or after the mixing of the waste material into the molten sulphur binder. The filler may be added and mixed into either the unmolten sulfur or the molten sulphur binder by any conventional mixing device, vessel or apparatus or by any conventional mixing method or process capable of mixing the filler into the unmolten sulfur or the molten sulphur binder, as required.

In addition, the filler may be preheated prior to combining the filler with the molten sulfur binder in order to minimize any cooling of the molten sulfur binder as a result of this combining step. Thus, as with the preheating of the waste material, the preheating of the filler is also beneficial from a practical standpoint in order to avoid any necessary reheating of the molten sulfur binder, to assist in the reduction or elimination of any moisture in the mixture of the waste material, the filler and the molten sulfur binder and to minimize or reduce any undesirable foaming of the mixture. However, this preheating step is also considered to be preferred only.

Where the step of preheating the filler is performed, the filler is preferably preheated to a temperature of about the temperature of the molten sulfur binder. More preferably, the filler is preheated to a temperature of between about 120 and 200 degrees Celsius. Alternately, the filler may be preheated to a temperature higher than the desired temperature of the molten sulfur binder, but lower than the igniting temperature of the sulfur, and added to the unmolten sulfur in a uniform fashion to melt the sulfur.

The amount of the waste material to be mixed into the molten sulphur binder, and the relative proportions of the sulphur binder and the waste material, will vary depending upon various factors including the type of waste material used, the desired properties of the resulting synthetic aggregate, whether or not a stabilizer is used, the desired workability of the mix, the particular process being used to perform the separating step and the temperature regime of the process. Similarly, where a stabilizer is used, the amount of the stabilizer to be combined with the molten sulphur binder, and the relative proportions of the sulphur binder, the waste material and the stabilizer will also vary depending upon various factors including the type of waste material used, the type of stabilizer used, the desired properties of the resulting synthetic aggregate, the desired workability of the mix, the particular process being used to perform the separating step and the temperature regime of the process.

For instance, in the preferred embodiment utilizing a stabilizer, it has been found that the amount of the waste material may range between about 50 and 95 percent by weight of the total weight of the synthetic aggregate. The upper limits of the range have been found to be possible where the waste material and the filler, if used, are represented by coarse particles with low specific area and little or no stabilizer is used, thus requiring less molten binder to coat the particles. However, preferably, finer particles of waste material are used, which comprise up to about 80 percent by weight of the synthetic aggregate. The amount of the stabilizer may range between about 2 and 40 percent by weight of the total weight of the synthetic aggregate. For example, the following mix designs have been used to produce the synthetic aggregate (note: all material quantities are a percentage of total weight):

### A. Produced Sand Based Aggregates

| Mix Number | Composition |
|---|---|
| A.1 | Produced Sand (dried) - 65-80% (average-70%) Sulfur - 20-35% |
| A.2 | Produced Sand - 70% SRX Polymer (stabilizer) - 2% Sulfur - 28% |
| A.3 | Produced Sand - 65% Fly Ash - 5% SRX Polymer (stabilizer) - 2% Sulfur - 28% |
| A.4 | Produced Sand - 70% Fly Ash - 5% Sulfur - 25% |
| A.5 | Produced Sand - 70% Phosphogypsum (stabilizer) - 5% Sulfur - 25% |
| A.6 | Produced Sand - 66% Ground Slag, 6000 Blain (stabilizer) - 5% Sulfur - 29% |

### B. Slag / Fly Ash Based Aggregates

| Mix Number | Composition |
|---|---|
| B.1 | Barren Slag - 35% Ground Slag, 6000 Blain (stabilizer) - 42% Sulfur - 23% |
| B.2 | Barren Slag - 51% Fly Ash - 29% Sulfur - 20% |
| B.3 | Ground Slag, <4000 Blain (waste) - 70% Fly Ash - 5% Sulfur - 25% |

Notes:
- All of the aggregates produced from these mixes were produced through extrusion pelletizing
- Further mixes used in testing shaking or rolling pelletizers were either:
   (a) Produced Sand - 70%
      Sulfur - 30%; or
   (b) Produced Sand - 75%
      Sulfur - 25%
- The mix temperature range for shaking or rolling pelletizers is between about 160-200 degrees Celsius.

Following the production of the encapsulated waste material, the encapsulated waste material is separated into discrete particles having a size or sizes suitable for use as an aggregate to produce the synthetic aggregate. The size and shape of each discrete particle formed by the separating step need not be the same. In other words, the size and shape of the discrete particles need not be uniform as long as the size and shape of each discrete particle is suitable for use as an aggregate. Further, as long as the size or sizes of the discrete particles are suitable for use as an aggregate, the actual particle size may vary depending upon the desired use or uses of the synthetic aggregate. However, in the preferred embodiment, the discrete particles are all of a size in a range of between about 3 and 40 mm.

Any conventional device, apparatus, method or process capable of separating the encapsulated waste material into discrete particles having the desired size may be used. However, in the preferred embodiment, the separating step is comprised of pelletizing the encapsulated waste material to produce the synthetic aggregate. Pelletization is preferred due to the relatively higher surface area to volume ratio of the synthetic aggregate achieved as compared to other processes. In addition, pelletization may result in a more uniform, stable product with less imperfections. Most conventional pelletizing apparatuses and any conventional pelletizing processes may be used. However, preferably, such apparatuses or processes use extrusion or rolling techniques.

Finally, the process is also comprised of cooling the molten sulphur binder to harden the encapsulated waste material. As a result, a hardened synthetic aggregate, ready for use, is formed. The molten sulphur binder may be cooled to any temperature permitting the hardening of the encapsulated waste material, and in particular the hardening of the sulphur binder coating the waste material. However, preferably the molten sulphur binder is cooled to a temperature of less than about 90 degrees Celsius. The cooling step may be performed actively, by any conventional cooling device, apparatus, method or process, or passively by simply permitting the heat to dissipate from the sulphur binder.

The cooling step may be performed at any time following the production of the encapsulated waste material by the mixing step. More particularly, depending upon the device, apparatus, method or process used to separate the encapsulated waste material into discrete particles, cooling of the molten sulphur binder may be required at one or more of before, during or after the separating step. For instance, the molten sulphur binder may be cooled prior to the separating step where the separating step involves grinding the hardened encapsulated waste material to form the discrete particles. In the preferred embodiment in which the encapsulated waste material is pelletized, the cooling step may partially occur prior to the pelletization so that the encapsulated waste material has a consistency compatible with the pelletization process. In addition, the pelletization process may cool the molten sulphur binder during the pelletization to form the discrete particles. Finally, the sulphur binder may be adequately cooled during the pelletization to produce a hardened synthetic aggregate ready for transport or storage. However, alternately, the sulphur binder may require further cooling following the pelletization process.

In the preferred embodiment, one pelletizer includes a hopper inlet, a casing chamber with a rotating screw conveyor and a stationary perforated dye at the end of the casing. Following the preparation of the encapsulated waste material, the encapsulated waste material is transferred to the pelletizer. Once in the pelletizer, the encapsulated waste material is conveyed through the pelletizer by turning the handle of the rotating screw conveyor towards the perforated dye. As the encapsulated waste material is squeezed through the perforated dye, the sulphur binder, and thus the encapsulated waste material, are cooled by spraying water on the outside of the dye. As a result, the encapsulated waste material is formed into discrete particles, being hard cylindrical pellets, which break off at the dye face. The pellets or synthetic aggregate are produced ready for handling and do not require any further cooling.

Alternately, the pelletizer may include a preferably sloped flat or corrugated sheet attached to a vibrator. The encapsulated waste material is discharged on the sheet and separated into discrete particles which then roll along the sloped sheet forming the pellets. In a further alternative, the pelletizer may include a rotating drum preferably sloped along its axis. The encapsulated waste material is discharged into the drum and separated into discrete particles which then roll into pellets.

The resulting synthetic aggregate tends to be relatively strong and durable as compared to other natural and synthetic aggregates. In addition, the synthetic aggregate prevents, or at least minimizes, the leaching of any contaminants from the waste material. As well, the synthetic aggregate has been found to have lower electric and thermal conductivities than most natural aggregates, and in particular natural gravel. These qualities are thought to occur as sulphur tends to be both a dielectric and an insulator. Finally, the synthetic aggregate may be crushed, remelted and reformed as desired or required for any particular application without any substantial loss of strength or other properties of the synthetic aggregate.

Accordingly, one of the specific applications of the synthetic aggregate is its use in the construction industry. For instance, its lower electrical conductivity may be beneficial in the use of the synthetic aggregate as a base cover for electrical substations. As well, the lower thermal conductivity may be beneficial in the use of the synthetic aggregate for backfilling trenches with water pipes to protect them from freezing or for road sub-base or foundation construction to prevent frost heave action on pavements or foundations.

### Examples:

The following examples serve more fully to illustrate the invention. In particular, leachate, strength and durability tests were performed on various test specimens.

### Leachate Tests

The leachate tests were performed to determine the leaching of various contaminants from untreated produced sand as compared to the synthetic aggregate. The produced sand was obtained from the Norcen Energy site in Elk Point, Alberta, Canada. The synthetic aggregate was produced utilizing the produced sand as the waste material. In addition, the synthetic aggregate was prepared from the following:
sulphur - 28 % by weight
waste material (produced sand) - 70 % by weight
stabilizer (SRX Polymer) - 2 % by weight
The leachate tests were performed following the standard procedure prescribed by the United States of America Environmental Agency. The results of the leachate tests are set out below in Tables 1-3.

**Table 1**

| T.C.L.P. Leachate - Inorganic Parameter | | |
|---|---|---|
| Parameter | Produced Sand | Synthetic Aggregate |
| chloride | 181 mg/L | 68.7 mg/L |
| sulphur | 4.24 mg/L | 3.50 mg/L |

**Table 2**

| Total Hydrocarbon (C30) - Leachate Analysis | | | |
|---|---|---|---|
| Parameter | | Produced Sand | Synthetic Aggregate |
| Hexanes | C6 | <0.1 µg/ml | <0.1 µg/ml |
| Heptanes | C7 | <0.1 µg/ml | <0.1 µg/ml |
| Octanes | C8 | <0.1 µg/ml | <0.1 µg/ml |
| Nonanes | C9 | <0.1 µg/ml | <0.1 µg/ml |
| Decanes | C10 | <0.1 µg/ml | <0.1 µg/ml |
| Undecanes | C11 | <0.1 µg/ml | <0.1 µg/ml |
| Dodecanes | C12 | <0.1 µg/ml | <0.1 µg/ml |
| Tridecanes | C13 | 0.2 µg/ml | <0.1 µg/ml |
| Tetradecanes | C14 | <0.1 µg/ml | <0.1 µg/ml |
| Pentadecanes | C15 | <0.1 µg/ml | <0.1 µg/ml |
| Hexadecanes | C16 | <0.1 µg/ml | <0.1 µg/ml |
| Heptadecanes | C17 | <0.1 µg/ml | <0.1 µg/ml |
| Octadecanes | C18 | <0.1 µg/ml | <0.1 µg/ml |
| Nonadecanes | C19 | 0.2 µg/ml | <0.1 µg/ml |
| Eicosanes | C20 | <0.1 µg/ml | <0.1 µg/ml |
| Heneicosanes | C21 | <0.1 µg/ml | <0.1 µg/ml |
| Docosanes | C22 | <0.1 µg/ml | <0.1 µg/ml |
| Tricosanes | C23 | <0.1 µg/ml | <0.1 µg/ml |
| Tetracosanes | C24 | <0.1 µg/ml | <0.1 µg/ml |
| Pentacosanes | C25 | <0.1 µg/ml | <0.1 µg/ml |
| Hexacosanes | C26 | <0.1 µg/ml | <0.1 µg/ml |
| Heptacosanes | C27 | <0.1 µg/ml | <0.1 µg/ml |
| Octacosanes | C28 | <0.1 µg/ml | <0.1 µg/ml |
| Nonacosanes | C29 | <0.1 µg/ml | <0.1 µg/ml |
| Tricontanes plus | C30+ | <0.1 µg/ml | <0.1 µg/ml |
| TOTAL Hydrocarbon Content | | 0.4 µg/ml | <0.1 µg/ml |

**Table 3**

| Subsurface Remediation Analysis - Leachate (µg/ml) | | | | | | | | |
|---|---|---|---|---|---|---|---|---|
| | Benzene | Toluene | Ethyl-benzene | Xylenes | Surrogate * (TPGH) | TPH | TEH | TPGH 64X |
| Synthetic Aggregate | N.R. | N.R. | N.R. | N.R. | 100 | <0.1 | <0.1 | <0.01 |
| Produced Sand | N.R. | N.R. | N.R. | N.R. | 97 | 0.4 | 0.4 | <0.01 |
| Method Detection Limits | | | | | | 0.01 | 0.1 | 0.01 |
| NOTES: N.R. - Not Required TPH - set to TEH for sample due to hydrocarbon profile. *- Reported as percent recovery of Toluene-d8 added to sample prior to analysis TPGH - Total Purgeable Hydrocarbons (C₃-C₁₅+1); Calculated based on all purgeable compounds using gasoline response. TEH - Total Extractable Hydrocarbons (C₆-C₃₀₊); Calculated based on all extractable compounds using C₆-C₂₈ alkanes response. | | | | | | | | |

### Strength Tests

The strength tests were performed by forming mass test cubes, which were then used to determine compressive strength upon destroying the cubes in a compression tester. Strength results related to some of the compositions from which synthetic aggregate was produced, as outlined above, are as follows:

**Table 4**

| Strength Results | |
|---|---|
| Mix Number | Average Strength (MPa) |
| A.1 | 14.0 |
| A.4 | 20.2 |
| A.6 | 19.3 |

Notes:
- Results for Mix A.1 were averaged over the strength of 9 cubes with a minimum of 7.4 MPa and a maximum of 19.0 MPa.
- Results for Mix A.4 were averaged over the strength of 6 cubes with a minimum of 17.6 MPa and a maximum of 24.4 MPa.
- Results for Mix A.6 were averaged over the strength of 6 cubes with a minimum of 16.4 MPa and a maximum of 21.8 MPa.
- All values were 24 hour strengths.
Other compositions have been tested as follows, the results for which are set out in Tables 5-9 below:

**Table 5**

| Wollastonite and Sulphur | | | | | |
|---|---|---|---|---|---|
| Cube | Wollastonite (% by wt. of Sulphur) | Wollastonite (% of total weight) | Gauge (Ibs) | Strength (MPa.) | Average Strength (MPa.) |
| S-0 | 0 | 0 | 4860 | 8.4 | 7.6 |
| S-0 | 0 | 0 | 5120 | 8.8 | |
| S-0 | 0 | 0 | 3250 | 5.6 | |
| W-S-1 | 10 | 9 | 13700 | 23.6 | 18.6 |
| W-S-1 | 10 | 9 | 7850 | 13.5 | |
| W-S-2 | 15 | 13 | 11700 | 20.2 | 17.7 |
| W-S-2 | 15 | 13 | 8800 | 15.2 | |
| W-S-3 | 20 | 17 | 7780 | 13.4 | 14.3 |
| W-S-3 | 20 | 17 | 8800 | 15.2 | |

**Table 6**

| Flyash and Sulphur | | | | | |
|---|---|---|---|---|---|
| Cube | Flyash (% by wt. of Sulphur) | Flyash (% of total weight) | Gauge (Ibs) | Strength (MPa.) | Average Strength (MPa.) |
| S-O | 0 | 0 | 4860 | 8.4 | 7.6 |
| S-O | 0 | 0 | 5120 | 8.8 | |
| S-O | 0 | 0 | 3250 | 5.6 | |
| FA-S-1 | 10 | 9 | 12270 | 21.2 | 23.7 |
| FA-S-1 | 10 | 9 | 14870 | 25.6 | |
| FA-S-1 | 10 | 9 | 14110 | 24.3 | |
| FA-S-2 | 15 | 13 | 17670 | 30.5 | 18.8 |
| FA-S-2 | 15 | 13 | 5540 | 9.6 | |
| FA-S-2 | 15 | 13 | 9580 | 16.5 | |
| FA-S-3 | 20 | 17 | 11000 | 19.0 | 18.3 |
| FA-S-3 | 20 | 17 | 8750 | 15.1 | |
| FA-S-3 | 20 | 17 | 12060 | 20.8 | |

**Table 7**

| Wollastonite + Flyash and Sulphur | | | | | |
|---|---|---|---|---|---|
| Cube | Wollastonite and Flyash (% by wt. of Sulphur) | Wollastonite and Flyash (% of total weight) | Gauge (Ibs) | Strength (MPa.) | Average Strength (MPa.) |
| S-O | 0 | 0 | 4860 | 8.4 | 7.6 |
| S-O | 0 | 0 | 5120 | 8.8 | |
| S-O | 0 | 0 | 3250 | 5.6 | |
| F-W-1 | 10 | 9 | 2190 | 3.8 | 8.3 |
| F-W-1 | 10 | 9 | 3560 | 6.1 | |
| F-W-1 | 10 | 9 | 8740 | 15.1 | |
| F-W-2 | 15 | 13 | 5360 | 9.2 | 6.3 |
| F-W-2 | 15 | 13 | 2450 | 4.2 | |
| F-W-2 | 15 | 13 | 3070 | 5.3 | |
| F-W-3 | 20 | 17 | 4940 | 8.5 | 6.8 |
| F-W-3 | 20 | 17 | 2560 | 4.4 | |
| F-W-3 | 20 | 17 | 4290 | 7.4 | |

- Notes:: -Wollastonite and Flyash were added in equal proportions. For example, for a mix with 13% by total weight of wollastonite and fly ash, 6.5% is wollastonite and 6.5% is fly ash.

**Table 8**

| Ground Slag (6000 Blain) and Sulphur | | | | | |
|---|---|---|---|---|---|
| Cube | Ground Slag (% by wt. of Sulphur) | Ground Slag (% of total weight) | Gauge (Ibs) | Strength (MPa.) | Average Strength (MPa.) |
| S-O | 0 | 0 | 4860 | 8.4 | 7.6 |
| S-O | 0 | 0 | 5120 | 8.8 | |
| S-O | 0 | 0 | 3250 | 5.6 | |
| GS-S-1 | 10 | 9 | 13580 | 23.4 | 23.3 |
| GS-S-1 | 10 | 9 | 14830 | 25.6 | |
| GS-S-1 | 10 | 9 | 12140 | 20.9 | |
| GS-S-2 | 15 | 13 | 13000 | 22.4 | 21.6 |
| GS-S-2 | 15 | 13 | 11720 | 20.2 | |
| GS-S-2 | 15 | 13 | 12810 | 22.1 | |
| GS-S-3 | 20 | 17 | 17230 | 29.7 | 28.1 |
| GS-S-3 | 20 | 17 | 14340 | 24.7 | |
| GS-S-3 | 20 | 17 | 17380 | 30.0 | |
| B1-01 | 33 | 25 | 17690 | 30.5 | 30.1 |
| B1-01 | 33 | 25 | 17270 | 29.8 | |

**Table 9**

| Coke and Sulphur | | | | | |
|---|---|---|---|---|---|
| Cube | Coke (% by wt. of Sulphur) | Coke (% of total weight) | Gauge (Ibs) | Strength (MPa.) | Average Strength (MPa.) |
| C-S-1 | 10 | 9 | 9640 | 16.6 | 17.1 |
| C-S-1 | 10 | 9 | 9130 | 15.7 | |
| C-S-1 | 10 | 9 | 10960 | 18.9 | |
| C-S-2 | 15 | 13 | 11190 | 19.3 | 19.9 |
| C-S-2 | 15 | 13 | 9610 | 16.6 | |
| C-S-2 | 15 | 13 | 13830 | 23.8 | |
| C-S-3 | 20 | 17 | 10550 | 18.2 | 18.9 |
| C-S-3 | 20 | 17 | 11340 | 19.6 | |
| C-S-3 | 20 | 17 | 4590 | 7.9* | |

| | | | | | |
|---|---|---|---|---|---|
| Notes : *result not included in calculation of average | | | | | |

### Durability Tests

The durability tests were performed by subjecting the test specimens (actual synthetic aggregate) to numerous freeze-thaw cycles The particulars of the materials and mix parameters for these tests are as follows:

### (a) Testing Procedure

1. 190 grams of synthetic aggregate, 5-15 mm in size, is placed in a 1.5 inches x 3.0 inches x 2.0 inches plastic container.
2. The synthetic aggregate undergoes one freeze-thaw cycle every 24 hours. The cycle is induced by submerging the aggregate in tapwater for 9.0 hours, draining the water from the sample and placing the sample in a freezer for the next 15. 0 hours. Five cycles are achieved each week.
3. For the purposes of this invention, each week the samples are qualitatively examined and compared to a control group of aggregates that have not undergone freeze-thaw cycling. In addition, another control group aggregate has been tested which is a synthetic aggregate produced from expanded slate, a material which has been on the market for several decades.
4. The aggregate samples are subjected to the following hand tests:
   Test (a) - scratching to evaluate surface integrity;
   Test (b) - rolling over comers and edges attempting to break off pieces of aggregate; and
   Test (c) - attempting to shear aggregate pieces manually to evaluate strength loss.
5. It should be noted that the durability tests performed were qualitative only and were not standard durability tests. It is anticipated that once a specific process and synthetic aggregate are selected for commercial application that standard durability tests will be conducted on the synthetic aggregate.

### (b) Testing Results

Eleven different synthetic aggregate samples were subjected to freeze-thaw testing. The majority were produced by extrusion pelletizing and crushing, but two samples were produced by crushing sheets of material and one sample was produced by plate-vibration pelletizing.

A rating system with a scale of 1 to 5 was used to evaluate degradation under freeze-thaw testing. The aggregate received a rating for each of the three hand tests (a) - (c) previously described. A "5" corresponded to the undiminished properties of the control sample which had undergone no cycling. A "1" corresponded to a badly deteriorated sample which crumbles under moderate finger pressure.

The number of cycles listed is the point at which deterioration was first noticed. However, the test results set out below reflect the current status of ongoing durability tests with respect to some of the mixes. Therefore, where testing is ongoing and no degradation or deterioration has been noted to date, the number of cycles to deterioration is not specifically provided. Rather, the test results merely indicate the number of cycles conducted to date.

Strength results related to some of the compositions from which synthetic aggregate was produced, as outlined previously, are as follows:

**Table 10**

| Results of Freeze-Thaw Cycling Durability Tests | | | | | |
|---|---|---|---|---|---|
| Mix No. | No. of Cycles | Test (a) Rating | Test (b) Rating | Test (c) Rating | Observations |
| A.1* | 35 | 4 | 3 | 5 | aggregate appears to be becoming slightly crumbly at the comers but is still maintaining overall integrity and strength |
| A.2 | 35 | 4 | 4 | 4 | aggregate becoming "softer" and more crumbly |
| A.4 | 45 | 5 | 4 | 4 | aggregate noticeably harder (more difficult to scratch) than mixes A.1 and A.2; aggregate more prone to shear into halves rather than crumble |
| A.5 | 25 | 3 | 3 | 3 | aggregate deteriorated quickly, was crumbly and weak to begin with; aggregate with phosphogypsum is weak under freeze-thaw |
| A.6 | 45 | 5 | 4 | 4 | very similar to mix A.4; aggregate was noticeably harder than others; not crumbly but tended to shear more easily than control sample |
| B.1 | - | 5 | 5 | 5 | no degradation noticed after 55 cycles; very strong and hard aggregate |
| B.2 | 40 | 4 | 3 | 4 | initially hard and strong; although aggregate is still hard and has maintained its integrity, it has become more crumbly around the edges and corners; some strength loss is evident as aggregate is more easily sheared |
| B.3 | - | 5 | 5 | 5 | no deterioration after 45 cycles; very hard and strong aggregate |
| A.7* | 20 | 2 | 2 | 2 | aggregate became crumbly, soft and weak very quickly; very poor freeze-thaw durability |
| A.8* | 30 | 3 | 2 | 2 | aggregate was originally very hard; aggregate tended to fracture into small pieces after 35 cycles |
| A.9* | - | 5 | 5 | 5 | no deterioration noticed after 27 cycles; rounded aggregate (not angular like other samples) |
| Notes: A.1* - mix of 70% Produced Sand and 30% Sulfur A.7* - mix of 70% Produced Sand and 30% Sulfur (crushed unconsolidated quenched sheets) A.8* - mix of 70% Produced Sand and 30% Sulfur (crushed vibrated quenched sheets) A.9* - mix of 70% Produced Sand and 30% Sulfur (aggregate formed from a vibrating trough) | | | | | |

### (c) Test Summary - Ranking of aggregates according to freeze-thaw durability (in declining order of durability):

Produced Sand Based Aggregates:
1. Mixes A.9, A.6 and A.4
2. Mixes A.1 and A.2
3. Mix A.8
4. Mixes A.7 and A.5

Slag / Flyash Based Aggregates:
1. Mixes B.1 and B.3
2. Mix B.2

## Claims

1. A process for converting a waste material into a synthetic aggregate, the process comprising the steps of:
creating molten binder;
mixing an amount of waste material into the molten sulphur binder such that the waste material is substantially coated by molten sulphur binder to produce an encapsulated waste material;
separating the encapsulated waste material into discrete particles having a size suitable for use as an aggregate to produce the synthetic aggregate; and
cooling the molten sulphur binder to harden the encapsulated waste material.

2. The process as claimed in claim 1 further comprising the step of combining an effective amount of a stabilizer with the molten sulphur binder prior to the separating step for stabilizing the structure of the sulphur binder.

3. The process as claimed in claim 2 wherein the combining step is performed prior to the mixing step.

4. The process as claimed in either claim 2 or claim 3 wherein the stabilizer is finely ground.

5. The process as claimed in claim 4 wherein the stabilizer has a Blain of at least about 4000.

6. The process as claimed in any of claims 2 to 5 wherein the stabilizer is comprised of a portion of the waste material.

7. The process as claimed in any of claims 2 to 5 wherein the stabilizer is comprised of a mineral additive.

8. The process as claimed in any of claims 2 to 5 wherein the stabilizer is comprised of a metallurgical slag.

9. The process as claimed in any of claims 2 to 5 wherein the stabilizer is comprised of fly ash.

10. The process as claimed in any of claims 2 to 5 wherein the stabilizer is comprised of a polymerized sulphur.

11. The process as claimed in any preceding claim wherein the cooling step comprises cooling the molten sulphur binder to a temperature of less than about 90 degrees Celsius.

12. The process claimed in any preceding claim wherein the separating step is comprised of pelletizing the encapsulated waste material to produce the synthetic aggregate.

13. The process as claimed in any preceding claim wherein the waste material is comprised of produced sand.

14. The process as claimed in any of claims 1 to 12 wherein the waste material is comprised of fly ash.

15. The process as claimed in any of claims 1 to 12 wherein the waste material is comprised of metallurgical slag.

16. The process as claimed in any preceding claim further comprising the step of combining an effective amount of a filler with the molten sulphur binder prior to the separating step for reinforcing the synthetic aggregate.

17. The process claimed in claim 16 wherein the filler is comprised of wollastonite.

18. A synthetic aggregate comprising:
a waste material; and
an amount of sulphur binder for substantially coating the waste material such that the waste material is encapsulated thereby.

19. The synthetic aggregate as claimed in claim 18 further comprising an effective amount of a stabilizer for stabilizing the structure of the sulphur binder.

20. The synthetic aggregate as claimed in claim 19 wherein the stabilizer is finely ground.

21. The synthetic aggregate as claimed in claim 20 wherein the stabilizer has a Blain of at least about 4000.

22. The synthetic aggregate as claimed in any of claims 19 to 21 wherein the stabilizer is comprised of a portion of the waste material.

23. The synthetic aggregate as claimed in any of claims 19 to 21 wherein the stabilizer is comprised of a mineral additive.

24. The synthetic aggregate as claimed in any of claims 19 to 21 wherein the stabilizer is comprised of a metallurgical slag.

25. The synthetic aggregate as claimed in any of claims 19 to 21 wherein the stabilizer is comprised of fly ash.

26. The synthetic aggregate as claimed in any of claims 19 to 21 wherein the stabilizer is comprised of a polymerized sulphur.

27. The synthetic aggregate as claimed in any of claims 18 to 26 wherein the waste material is comprised of produced sand.

28. The synthetic aggregate as claimed in any of claims 18 to 26 wherein the waste material is comprised of fly ash.

29. The synthetic aggregate as claimed in any of claims 18 to 26 wherein the waste material is comprised of metallurgical slag.

30. The synthetic aggregate as claimed in any of claims 18 to 29 further comprising an effective amount of a filler for reinforcing the synthetic aggregate.

31. The synthetic aggregate as claimed in claim 30 wherein the filler is comprised of wollastonite.
